(19) Europäisches Patentamt
European Patent Office
Office européen des brevets

(11) Veröffentlichungsnummer: **0 012 303**
**B1**

(12) # EUROPÄISCHE PATENTSCHRIFT

(45) Veröffentlichungstag der Patentschrift: **16.06.82**

(51) Int. Cl.³: **D 06 N 3/14,** C 08 G 18/38, C 08 G 18/66

(21) Anmeldenummer: **79104816.8**

(22) Anmeldetag: **01.12.79**

(54) **Verwendung von Polyurethanweichschaumstoffen zum Kaschieren von textilen Flächengebilden.**

(30) Priorität: **16.12.78 DE 2854391**

(43) Veröffentlichungstag der Anmeldung: **25.06.80 Patentblatt 80/13**

(45) Bekanntmachung des Hinweises auf die Patenterteilung: **16.06.82 Patentblatt 82/24**

(84) Benannte Vertragsstaaten: **AT BE CH DE FR GB IT NL**

(56) Entgegenhaltungen:
**DE-A-2 036 592**
**DE-B-1 016 680**
**FR-A-1 359 075**
**US-A-3 167 575**
**US-A-3 205 120**
**US-A-3 354 241**
**US-A-3 639 542**
**US-A-3 850 859**
**US-A-3 931 450**
**US-A-4 061 696**

(73) Patentinhaber: **HOECHST AKTIENGESELLSCHAFT, Postfach 80 03 20, D-6230 Frankfurt/Main 80 (DE)**

(72) Erfinder: **Wortmann, Joachim, Dr., Friedrich-Jähne-Strasse 54, D-6093 Flörsheim-Wicker (DE)**
Erfinder: **Klose, Werner, Dr., Grachtstrasse 14, D-5042 Erftstadt (DE)**
Erfinder: **Dany, Franz-Josef, Dr., Kölner Ring 167, D-5042 Erftstadt (DE)**
Erfinder: **Staendeke, Horst, Dr., Von-Meer-Strasse 15, D-5042 Erftstadt (DE)**

**EP 0 012 303 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verwendung von Polyurethanweichschaumstoffen zum Kaschieren von textilen Flächengebilden

Die Erfindung betrifft die Verwendung von Polyurethanweichschaumstoffen zum Kaschieren von textilen Flächengebilden, zum Beispiel durch gleichmässiges Anschmelzen einer Seite des Schaumstoffes mittels einer Wärmequelle und Zusammendrücken der angeschmolzenen Seite des Schaumstoffes mit dem textilen Flächengebilde unter Ausbildung eines Laminates, wobei der Schaumstoff einen relativ weiten Schmelzbereich besitzt.

Es ist aus dem Kunststoff-Handbuch von Vielweg-Höchtlen Band VII «Polyurethane», Carl Hanser Verlag, München, 1966, Seiten 198 und 199 bekannt, mit Hilfe geeigneter Apparaturen nach dem Klebeverfahren oder nach dem thermischen Verfahren Verbindungen von Schaumstoff mit Textilbahnen oder thermoplastischen Folien herzustellen.

Beim Klebeverfahren werden Textilien oder Kunststoff-Folien mit geeigneten Klebestoffen kaschiert. Es ist dabei zu beachten, dass beim Auftrag des Klebestoffes auf den Schaumstoff kein geschlossener Klebefilm entsteht und ausserdem der verwendete Klebestoff nicht in das Textilgut oberflächlich eindringt, da dadurch die Elastizität des beschichteten Textils beeinträchtigt wird. Da sich vorgenannter Nachteil schwer vermeiden lässt, ist dem Klebeverfahren das thermische Verfahren vorzuziehen.

Bei der thermischen Methode der Textilkaschierung wird nach gleichmässigem Anschmelzen einer Seite des Schaumstoffes mittels eines Gasbrenners oder einer anderen Wärmequelle das Textil über eine Kalanderwalze mit dem Schaumstoff zusammengedrückt und dadurch eine Haftverbindung erzielt. Die Erhitzung der Schaumstoffoberfläche kann auch durch Infrarot-Bestrahlung oder durch Anwendung von Hochfrequenzströmen erfolgen. Das Kaschieren mittels eines Gasbrenners, auch Flammkaschieren genannt, erfordert eine gute Abstimmung der zeitlichen Abläufe des Kaschierprozesses, bestehend im Beflammen und Anschmelzen der Schaumstoffoberfläche sowie im Zusammendrükken des angeschmolzenen Schaumstoffes mit dem textilen Flächengebilde. Das Zusammendrücken beider Teile erfolgt im allgemeinen im Kalander, welchem der Schaumstoff sowie das Textil meistens in endlosen Bahnen zugeführt werden.

Zur Durchführung der thermischen Methode der Textilkaschierung mit Polyurethanschaumstoffen benötigt man einen Polyurethanschaumstoff, der beim Erhitzen nicht bei einer konstanten Temperatur, dem Schmelzpunkt, spontan und vollständig schmilzt, sondern dessen Schmelzvorgang mit einer gewissen Verzögerung innerhalb eines Temperaturbereichs abläuft. Solche Polyurethanschaumstoffe werden verständlicherweise vor allem dann benötigt, wenn sehr dünne Schaumstoffbahnen mit einer Dicke von beispielsweise 0,3 mm mit zwei Textilbahnen geklebt werden sollen. Ein Schaumstoff mit einem konstanten Schmelzpunkt würde in diesem Falle zu Schmelztröpfchen zerfliessen.

Polyurethanweichschaumstoffe mit relativ weiten Schmelzbereichen wurden bisher als Umsetzungsprodukte von Polyisocyanaten mit Polyesterpolyolen erhalten und zu dem genannten Zweck verwendet. Polyurethanweichschaumstoffe auf der Basis von Polyesterpolyolen sind jedoch relativ teuer und ausserdem aufgrund der Hydrolyseempfindlichkeit der Polyester nicht der ideale Schaumstoff zum Kaschieren von textilen Flächengebilden, von denen vielfach auch eine Waschbeständigkeit erwartet wird. Ein Ersatz der Polyesterpolyole bie der Herstellung der Schaumstoffe durch herkömmliche Polyätherpolyole, welche, abgesehen vom günstigen Preis, auch technische Vorteile besitzen, scheidet aus, da Polyurethanweichschaumstoffe auf der Basis von Polyätherpolyolen einen scharfen Schmelzpunkt besitzen.

Der vorerwähnte technische Vorteil des Ersatzes von Polyesterpolyolen durch Polyätherpolyole bei der Herstellung von Polyurethanweichschaumstoffen besteht darin, dass Polyätherpolyole Schaumblöcke mit einer Höhe von 0,80–1,0 m zu bilden vermögen, während im Vergleichsfalle nur maximale Schaumblockhöhen von 0,80 m zu erreichen sind. Es bestand schon deshalb ein technisches und wirtschaftliches Interesse, Schaumblöcke, hergestellt aus Polyätherpolyolen, im Verbund mit textilen Flächengebilden herzustellen.

Es wurde nunmehr gefunden, dass sich das Kaschieren von textilen Flächengebilden mit Polyurethanweichschaumstoffen, welche aus Polyätherpolyolen hergestellt wurden, dann realisieren lässt, wenn man einen Schaumstoff verwendet, zu dessen Herstellung neben dem Polyisocyanat und dem Polyätherpolyol zusätzlich noch ein phosphorhaltiges Polyol eingesetzt wurde. Durch den Zusatz des phosphorhaltigen Polyols zeichnet sich nämlich der Schaumstoff durch einen für das Kaschierverfahren günstigen Schmelzbereich aus. Dadurch wird es ermöglicht, nunmehr auch Polyurethanweichschaumstoffe auf der Basis von Polyätherpolyolen für das Kaschieren von textilen Flächengebilden verwenden zu können.

Die Verwendung ist dadurch gekennzeichnet, dass der Polyurethanweichschaumstoff ein Schmelzintervall von etwa 235 bis 310 °C besitzt und auf der Basis eines Gemisches aus einem Polyätherpolyol und einem phosphor- und halogenhaltigen Polyol hergestellt wurde, wobei das Gewichtsverhältnis zwischen dem Polyätherpolyol und dem phosphor- und halogenhaltigen Polyol 100 zu etwa 2–20 beträgt, und das phosphor- und halogenhaltige Polyol stellt grundsätzlich ein Gemisch dar bestehend aus

a) dem Produkt gemäss der allgemeinen Formel (I)

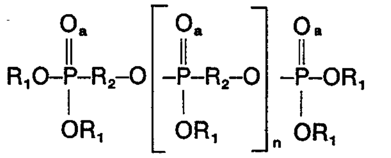 (I)

in welcher a = 1 oder 0 und 1, n = 0 bis 4, $R_1$ mindestens ein einfach oder mehrfach halogensubstituierter Alkylrest oder ein einfach oder mehrfach halogensubstituierter Arylrest mit höchstens 8 C-Atomen, wobei Halogen Chlor oder Brom ist, sowie mindestens ein hydroxylhaltiger Rest der allgemeinen Formel (II)

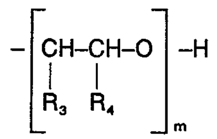 (II)

und $R_2$ ein Rest der allgemeinen Formel (III)

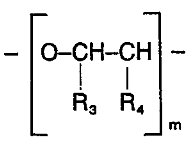 (III)

bedeutet, wobei in den Formeln (II und III) $R_3$ bzw. $R_4$ ein Wasserstoffatom oder ein gegebenenfalls chlorsubstituierter Alkylrest mit 1 bis 6 C-Atomen und m eine Zahl von 1 bis 4 ist, und

b) dem Produkt der allgemeinen Formel (IV)

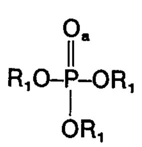 (IV)

in welcher a = 0 oder 1 ist und $R_1$ die vorstehend angegebene Bedeutung hat.

Vorzugsweise besitzt das Polyätherpolyol eine Hydroxylzahl von etwa 35 bis 80 mg KOH/g.

Schliesslich beträgt nach einer weiteren bevorzugten Ausführungsform der Erfindung das Gewichtsverhältnis zwischen dem Polyätherpolyol und dem phosphor- und halogenhaltigen Polyol 100 zu 3–10.

Die Durchführung des Kaschierens kann analog den bekannten Verfahren zum Herstellen von mit porösem Kaschiermaterial, insbesondere Textilien, verbundenem luftdurchlässigem Schaumstoff erfolgen, beispielsweise entsprechend der in der DE-PS 1 016 680 beschriebenen Verfahrensweise. Die gemäss Erfindung vorgeschlagenen Polyurethanweichschaumstoffe sind als solche ebenfalls bekannt und in der DE-OS 2 036 592 offenbart. Desgleichen sind die zur Herstellung des erfindungsgemässen Schaumstoffes erforderlichen phosphor- und halogenhaltigen Polyole in der DE-PS 2 036 595 vorbeschrieben. Somit beruht das Wesen der Erfindung lediglich in der speziellen Anwendung des Schaumstoffes gemäss der DE-OS 2 036 592 zum Kaschieren von textilen Flächengebilden.

Der Gegenstand der Erfindung ist als überraschend zu bezeichnen, da sowohl Polyurethanweichschaumstoffe auf der Basis von Polyätherpolyolen als auch von modifizierten Polyätherpolyolen, wie sie in der USA-Patentschrift 3 256 240 erläutert sind, zum Kaschieren von Textilien nicht geeignet sind. Die erfindungsgemässen Verfahrensprodukte zeichnen sich durch einen guten Verbund zwischen textilen Flächengebilden und Schaumstoff aus, sind waschbeständig und in bezug auf die Herstellungskosten preisgünstig.

Beispiel 1

A) Herstellung der phosphororganischen Verbindung:

In einem mit Rührer, Thermometer, Gaseinleitungsrohr und Rückflusskühler ausgestatteten Reaktionsgefäss wurden 2950 g Tris-2-chloräthylphosphat (10,3 Mol) vorgelegt und unter Ausschluss von Luft und Feuchtigkeit sowie unter Aufrechterhaltung einer Temperatur von 25 °C 294 g Phosphorpentoxid (2,06 Mol) und 349 g Polyphosphorsäure mit einem $P_2O_5$-Gehalt von 84 Gew.-% (1,03 Mol) hinzugefügt. Durch Erhitzen der Mischung auf 60 °C wurde das $P_2O_5$ in dem Gemisch gelöst. Nach Zusatz von 32 g $H_3PO_3$ und 10 g $Na_2HPO_4$ wurde das Gemisch auf 90 °C erhitzt und 3 Stunden bei dieser Temperatur gehalten. Danach wurde in das Gemisch bei 60 bis 80 °C Äthylenoxid eingeleitet, bis ein starker Rückfluss in dem mit Methanol und Trockeneis beschickten Kühler das Ende der Oxalkylierungsreaktion anzeigte. Nach Ausblasen des überschüssigen Äthylenoxids mit Stickstoff aus dem Reaktionsgemisch bei 90 °C wurden 4608 g einer nahezu farblosen Flüssigkeit mit einer Dichte von $D_4^{20}$ = 1,44 g/cm³ erhalten. Das Produkt wies einen $P_2O_5$-Gehalt von 29,5 Gew.-%, eine Hydroxylzahl von 114 mg KOH/g und eine Säurezahl von 2,5 mg KOH/g auf.

B) Herstellung des Polyurethanweichschaumes:

| | | |
|---|---|---|
| 100 | Gewichtsteile | Polyätherpolyol, hergestellt aus 75 Gew.-% Trimethylolpropan und 25 Gew.-% Polypropylenglykol und modifiziert mit Äthylenoxid, so dass das Polyätherpolyol ein mittleres Molekulargewicht von 3500, eine Hydroxylzahl von 45 mg KOH/g, 22% primäre OH-Gruppen und eine Säurezahl von < 1 mg KOH/g besass, |
| 4,0 | Gewichtsteile | Wasser |
| 0,18 | Gewichtsteile | Bis (2-dimethylaminoäthyl)-äther |
| 0,2 | Gewichtsteile | Zinn(II)octoat |
| 1,0 | Gewichtsteile | Polyoxyalkylen - Polydimethylsiloxan-Block-Copolymer (Silikonöl L 520 von Union Carbide, USA). |

5 Gemische der unter B) genannten Substanzen wurden in den angegebenen Mengenverhältnissen zusammen mit

a) 2
b) 5
c) 10
d) 15 bzw.
e) 20

Gewichtsteilen der nach A) hergestellten phosphororganischen Verbindung vermischt. Anschliessend wurden in die Gemische a) bis e) unter intensivem Rühren jeweils 51 Gewichtsteile eines Gemisches von 2,4-Toluylendiisocyanat und 2,6-Toluylendiisocyanat im Verhältnis 80 : 20 zugegeben. Nach einer Rührzeit von 10 Sek. wurden die 5 Mischungen jeweils in eine geeignete Form zur Aufschäumung gegeben. Die Aufschäumung setzte ca. 20 Sek. nach Isocyanat-Zugabe ein und war spätestens nach 150 Sek. beendet.

Die Schmelzpunkte bzw. -bereiche der Schäume wurden visuell und mit Hilfe der Differentialthermoanalyse (DTA) bestimmt. Für die DTA wurden die Schaumproben nach Kühlung mit flüssigem Stickstoff im Mörser zerkleinert. Die Messungen selbst wurden, um den bei der Beflammung des Schaumes herrschenden Verhältnissen nahezukommen, in feuchter Atmosphäre bei ca. 85% relativer Luftfeuchtigkeit durchgeführt. Die Ergebnisse sind in Tabelle 1 dargestellt. Die visuelle Bestimmung des Schmelzbereichs erfolgte an kleinen Schaumstückchen im Schmelzpunktsmikroskop.

Beispiel 2

A) Herstellung der phosphororganischen Verbindung:

In einem mit Rührer, Thermometer, Gaseinleitungsrohr und Rückflusskühler versehenen Reaktionsgefäss wurden 241,5 g 2-Chloräthanol (3 Mol) vorgelegt und unter Ausschluss von Luft und Feuchtigkeit durch einen Stickstoffgegenstrom 213 g Phosphorpentoxid (1,5 Mol) eingetragen, wobei die Temperatur des Reaktionsgemisches durch Kühlung mit Eis auf maximal 40 °C gehalten wurde. Nachdem sich das Phosphorpentoxyd vollständig aufgelöst hatte, wurden 1 g phosphorige Säure und 1,2 g $Na_2HPO_4$ zugesetzt. Die Mischung wurde 30 Minuten bei 45 °C gerührt. Nach Beschicken des Rückflusskühlers mit einem Methanol-Trockeneis-Gemisch wurde bei einer Temperatur von 59 °C Äthylenoxid in das Gemisch eingeleitet, bis ein starker Rückfluss das Ende der Reaktion anzeigte.

Nichtgebundenes Äthylenoxid wurde bei 90 °C durch einen Stickstoffstrom ausgeblasen. Es wurden 895 g einer leicht gelb gefärbten Flüssigkeit erhalten. Die Äthylenoxid-Aufnahme betrug 438,3 g oder etwa 10 Mol. Das Produkt hatte einen $P_2O_5$-Gehalt von 23,9 Gewichtsprozent, einen Chlorgehalt von 11,4 Gew.-% und eine Hydroxylzahl von 212 mg KOH/g. Die Säurezahl war kleiner als 1 mg KOH/g.

B) Herstellung des Polyurethanweichschaumes:

| | | | |
|---|---|---|---|
| 1) | 100 | Gewichtsteile | Polypropylenoxid - Polyäthylenoxid-Polyätherpolyol auf der Basis von Glycerin mit 75% endständigen primären OH-Gruppen und einer Hydroxylzahl von 56 mg KOH/g. |
| 2) | 3,5 | Gewichtsteile | Wasser |
| 3) | 0,16 | Gewichtsteile | N,N,N',N'-Pentamethyl-diäthylentriamin |
| 4) | 0,2 | Gewichtsteile | Di-n-butylzinndilaurat |
| 5) | 1,0 | Gewichtsteile | Polyoxyalkylen - Polydimethylsiloxan-Block-Copolymer (Silikonöl L 520) |
| 6) | 10 | Gewichtsteile | der nach Beispiel 2A) hergestellten phosphororganischen Verbindungen |
| 7) | 52 | Gewichtsteile | eines Gemisches von 80 Gew.-% 2,4-Toluylendiisocyanat und 20 Gew.-% 2,6-Toluylendiisocyanat. |

Aus den aufgeführten Komponenten 1) bis 7) wurden durch Vermischen Polyurethanschäume hergestellt, dergestalt, dass

a) die Substanzen 1) und 6) vorgemischt und nach 24stündigem Stehen die Substanzen 2) bis 5) zugegeben und zuletzt die Substanz 7) eingerührt wurde,

b) Substanzen 3), 4), 5) und 6) vorgemischt und nach 24stündigem Stehen 1) und 2) zugegeben und zuletzt 7) eingerührt wurde oder

c) die Substanzen 1) bis 6) vermischt und anschliessend 7) eingerührt wurde.

Jeweils 10 Sek. nach der Zugabe der Isocyanat-Komponente 7) wurde das Gemisch in eine geeignete Form gegeben. Nach ca. 20 Sek. setzte die Schaumbildung ein und war nach etwa 150 Sek. beendet. Von den 3 Schäumen wurde, wie in Beispiel 1 beschrieben, der Schmelzbereich bestimmt. Die Ergebnisse sind in der Tabelle dargestellt. Es ergab sich kein Unterschied im Schmelzverhalten zwischen den Schäumen 2a), 2b) und 2c).

Beispiel 3

A) Herstellung von 4 (a–d) erfindungsgemässen phosphororganischen Polyolen

a) Ein Gemisch aus 190 g Tris-2-chloräthylphosphat (0,67 Mol), 113 g Polyphosphorsäure (84 Gew.-% $P_2O_5$, 0,33 Mol), 3 g phosphoriger Säure und 0,9 g $Na_2HPO_4$ wurde analog Beispiel 1 1 Stunde lang auf 150 °C erhitzt. Nach Abkühlen des Gemisches auf 50 °C wurden im Verlauf von 3 Stunden 289 g Propylenoxid eingetropft. Nach Ausblasen des überschüssigen nicht umgesetzten Propylenoxids hinterblieben 581 g einer leichtgelblich gefärbten Flüssigkeit, mit einem $P_2O_5$-Gehalt von 25,2 Gew.-%, einem Chlorgehalt von 11,3 Gew.-% und einer Hydroxylzahl von 224 mg KOH/g.

b) In einem Reaktionsgefäss analog Beispiel 1 wurden 105 g Tris-(2,3-dibrompropyl)-phosphat und 51 g Polyphosphorsäure mit einem $P_2O_5$-Gehalt von 84 Gew.-% unter Zusatz von 0,7 g $H_3PO_3$ gemischt und anschliessend 1 Stunde lang auf 90 °C erhitzt. Nach Abkühlen des Gemisches auf 30 °C wurden 86 g Tris(2-chloräthyl)-phosphat, 0,6 g $H_3PO_3$ und 0,6 g $Na_2HPO_4$ hinzugefügt und

die Mischung wiederum 1 Stunde bei 90 °C gerührt. Danach wurde bei einer Temperatur von 60 bis 80 °C Äthylenoxid eingeleitet, bis ein starker Rückfluss das Ende der Äthylenoxid-Anlagerung anzeigte. Nach dem Vertreiben des überschüssigen Äthylenoxids durch einen Stickstoffstrom bei 80 bis 90 °C wurden 347 g eines schwach bräunlich gefärbten Produktes erhalten, das einen $P_2O_5$-Gehalt von 21,9 Gew.-%, einen Chlorgehalt von 9,0 Gew.-% und eine Hydroxylzahl von 161 mg KOH/g aufwies.

c) 404 g Tris-2-chloräthyl-phosphit (1,5 Mol), 1,69 g Polyphosphorsäure mit 84 Gew.-% $P_2O_5$ (0,5 Mol) und 2 g $Na_2HPO_4$ wurden bei 60 °C in dem im Beispiel 1 beschriebenen Reaktionsgefäss gemischt und 1 Stunde lang auf 90 bis 95 °C erhitzt. Nach Abkühlen des Gemisches auf 60 °C wurde bis zum Auftreten eines starken Rückflusses Äthylenoxid eingeleitet und das nicht umgesetzte Epoxid bei 90 °C mit Stickstoff ausgeblasen. Es wurden 786 g einer leicht gefärbten Flüssigkeit mit einem $P_2O_5$-Gehalt von 25,2 Gew.-%, einem Chlorgehalt von 11,3 Gew.-% und einer Hydroxylzahl von 146 mg KOH/g erhalten.

d) In der im Beispiel 2 beschriebenen Apparatur wurden unter starker Kühlung 125 g 2-Bromäthanol und 71 g $P_2O_5$ zur Reaktion gebracht, wobei die Temperatur bei maximal 40 °C gehalten wurde. Anschliessend wurden 0,5 g $H_3PO_3$ und 0,5 g $Na_2HPO_4$ im Reaktionsgemisch aufgelöst und bei einer Temperatur von 60 bis 80 °C Äthylenoxid in das Gemisch eingeleitet, bis ein starker Rückfluss das Ende der Reaktion zeigt. Das überschüssige Äthylenoxid wurde mit einem Stickstoffatom bei 80 °C ausgeblasen. Es wurden 333 g einer bräunlich gefärbten Flüssigkeit mit einem $P_2O_5$-Gehalt von 21,2 Gew.-%, einem Bromgehalt von 21,5 Gew.-% und einer Hydroxylzahl von 188 mg KOH/g erhalten.

B) Herstellung der Polyurethanweichschäume:

| | | |
|---|---|---|
| 100 | Gewichtsteile | Polyätherpolyol wie in Beispiel 1 beschrieben |
| 4 | Gewichtsteile | Wasser |
| 0,19 | Gewichtsteile | Bis (2-dimethylaminoäthyl)-äther |
| 0,2 | Gewichtsteile | Zinn(II)octoat |
| 1,0 | Gewichtsteile | Silikonöl L 520 |

Jeweils ein Gemisch der vorgenannten 5 Substanzen wurden in den angegebenen Mengenverhältnissen zusammen mit jeweils 5 Gewichtsteilen der unter 3a)–3d) genannten Verbindungen vermischt und in die Gemische jeweils 51 Gewichtsteile des Isocyanats gemäss Beispiel 1 hinzugefügt. Nach 10 Sekunden wurden die einzelnen Gemische in geeignete Formen gegeben und der Aufschäumung, die jeweils nach spätestens 150 Sek. beendet war, überlassen.

Proben der erhaltenen Schäume aus den Polyolen a) bis d) wurden wie in Beispiel 1 beschrieben visuell und durch DTA auf ihren Schmelzbereich untersucht. Die Ergebnisse finden sich in der Tabelle.

Beispiel 4 (Vergleichsbeispiel)

Analog Beispiel 3B) wurde ein Polyätherweichschaum hergestellt, wobei jedoch auf die Zugabe der Phosphorpolyole gemäss 3a)–3d) verzichtet wurde. Der erhaltene Schaum wurde analog Beispiel 1 der Schmelzpunktbestimmung unterzogen. Die Ergebnisse finden sich in der Tabelle.

Beispiel 5 (Vergleichsbeispiel)

Analog Beispiel 3B) wurden Polyäther-Weichschäume hergestellt, wobei jedoch anstelle der erfindungsgemässen Phosphorpolyolen 3a)–3d) jeweils 5 Gewichtsteile

a) Tris(2-chloräthyl)phosphat,

b) des Umsetzungsproduktes aus Phosphorsäure und Epichlorhydrin gemäss US-PS 3 256 240 mit Gehalten von 8 Gew.-% $P_2O_5$, 18,7 Gew.-% Chlor und einer OH-Zahl von 201 mg KOH/g und

c) Diäthyl-N,N-diäthanol-amino-methylen-phosphonat

eingemischt wurden.

Die entstandenen Schäume wurden nach den Methoden aus Beispiel 1 auf ihren Schmelzpunkt untersucht. Die erhaltenen Ergebnisse sind in der Tabelle erfasst.

Beispiel 6 (Vergleichsbeispiel)

Folgende Substanzen wurden durch Rühren miteinander vermischt:

| | | |
|---|---|---|
| 100 | Gewichtsteile | eines Polyesterpolyols, hergestellt aus Adipinsäure und Diäthylenglykol unter Zugabe von ca. 1 Gew.-% Trimethylolpropan; das Polyol besass eine OH-Zahl von 60 mg KOH/g, ein Molekulargewicht von 2000 und eine Viskosität (25 °C) von ca. 20.000 mPa · s, |
| 3 | Gewichtsteile | Wasser |
| 1 | Gewichtsteil | Trichlorfluormethan |
| 1,3 | Gewichtsteile | Dimethylbenzylamin |
| 1,0 | Gewichtsteile | oberflächenaktives Silikonöl (L 532 von Union Carbide, USA) |

Anschliessend wurden unter kräftigem Rühren 51 Gewichtsteile des Toluylendiisocyanates gemäss Beispiel 1 zugegeben und nach 10 Sek. Rühren das Gemisch in eine Form zur Aufschwämmung eingebracht. Nach 130 Sek. war der Schäumvorgang beendet.

Der fertige Polyurethanweichschaum wurde wie in Beispiel 1 auf seinen Schmelzpunkt untersucht. Die Ergebnisse sind in der Tabelle enthalten.

In der Tabelle wurde als Schmelzbeginn bei der visuellen Bestimmung das erste Erscheinen von geschmolzenem Material an der Oberfläche gewertet; das Ende des Schmelzvorganges war das erste Auftreten einheitlicher flüssiger Phase. Sowohl aus der visuellen Bestimmung als auch aus der DTA geht eindeutig der Einfluss der erfindungsgemässen Substanzen auf das Schmelzverhalten von Polyätherschäumen hervor. Der Schmelzbereich verbreitert sich, ein zwischenzeitliches Plastifizieren konnte nicht beobachtet werden.

Im Vergleich dazu zeigte der reine Polyätherschaum ohne Zusätze einen recht scharfen Schmelzpunkt. Bei den Vergleichsbeispielen 5a)–5c) wird ein Schmelzverhalten zwischen den o.g. Extrema beobachtet. Zwar ist eine Verbreiterung des Schmelzbereiches erkennbar, diese ist aber nicht so ausgeprägt wie bei den Beispielen 1–3. Beispiel 6 zeigt den reinen Polyesterschaum mit breitem Schmelzbereich, der jedoch bei etwas höheren Temperaturen gegenüber den Polyätherschäumen liegt.

Beispiel 7

Von den Schäumen der Beispiele 1–6 wurden jeweils ca. 3 mm dicke Bahnen geschält. Diese Bahnen wurden mit einer Geschwindigkeit von ca. 5 m pro min unter Infrarotstrahlen hindurchgezogen, so dass beim Verlassen des Infrarotkanals die Schaumoberfläche noch eine Temperatur von 200 °C aufwies. Unmittelbar anschliessend wurde die Oberfläche des Schaumes mit Leinengewebe belegt und letzteres mit einem Druck von ca. 5 bar aufgepresst. Bei den Schäumen der Beispiele 1b) bis 1e), 2a) bis 2c), 3a) bis 3d) sowie des Vergleichsbeispiels 6 liessen sich ohne Schwierigkeiten festhaftende, vollständig offenporige Schaum/Textil-Verbunde herstellen. Bei dem Schaum des Beispiels 1a) war nach einigen Versuchen, bei denen die Heiztemperatur und die Verweilzeit sehr genau geregelt sein mussten, ein ebensolcher Verbund möglich. Mit den Schäumen der Beispiele 5a)–5c) konnten nur Schaum/Textil-Verbunde mit teilweise verklebten Poren hergestellt werden. Dadurch ging die Weichheit und Biegsamkeit der Verbundstoffe zum Teil verloren. Noch schlechter war das Ergebnis des Kaschierversuchs mit dem Schaum aus Beispiel 4. Hier wurden entweder Verbundstoffe, die an der Berührungsstelle hart waren und deren Poren weitgehend verklebt waren, erhalten oder, wenn die Aufheizung verringert bzw. die Verweilzeit verkürzt wurde, keine ausreichend feste Haftung zwischen Schaum und Textil erreicht.

Tabelle

| Schaumstoff entsprechend Beispiel | Visuelle Fp-Messung Schmelzbeginn (°C) | Schmelzende (°C) | DTA-Messung Beginn und Ende des endothermen Peaks (°C) | Form des Peaks |
|---|---|---|---|---|
| 1a) | 288 | 301 | 255–290 | breit, flach, unregelmässig |
| b) | 286 | 301 | 246–294 | breit, flach, unregelmässig |
| c) | 285 | 300 | 244–293 | breit, flach, unregelmässig |
| d) | 282 | 298 | 245–293 | breit, flach, unregelmässig |
| e) | 277 | 292 | 236–290 | breit, flach, unregelmässig |
| 2a), b), c) | 289 | 303 | 243–292 | breit, flach, unregelmässig |
| 3a) | 285 | 300 | 237–289 | breit, flach, unregelmässig |
| b) | 281 | 298 | 238–292 | breit, flach, unregelmässig |
| c) | 291 | 305 | 241–294 | breit, flach, unregelmässig |
| d) | 287 | 301 | 243–293 | breit, flach, unregelmässig |
| 4 | 296 | 300 | 258–279 | steil scharf |
| 5a) | 294 | 302 | 251–281 | scharf mittelhoch |
| b) | 290 | 299 | 250–285 | unregelmässig hoch |
| c) | 292 | 300 | 253–282 | scharf hoch |
| 6 | 291 | 308 | 266–353 | breit, flach, unregelmässig |

**Patentansprüche**

1. Verwendung von Polyurethanweichschaumstoffen mit einem Schmelzintervall von etwa 235 bis 310 °C, die auf der Basis eines Gemisches aus einem Polyätherpolyol und einem phosphor- und halogenhaltigen Polyol hergestellt wurden zum Kaschieren von textilen Flächengebilden, wobei das Gewichtsverhältnis zwischen dem Polyätherpolyol und dem phosphor- und halogenhaltigen Polyol 100 zu etwa 2–20 beträgt und das phosphor- und halogenhaltige Polyol ein Gemisch darstellt, bestehend aus

a) dem Produkt gemäss der allgemeinen Formel (I)

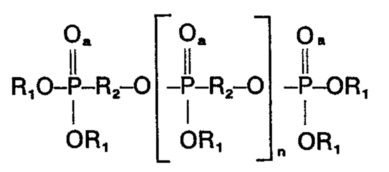

(I)

in welcher a = 1 oder 0 und 1, n = 0 bis 4, $R_1$ mindestens ein einfach oder mehrfach halogensubstituierter Alkylrest oder ein einfach oder mehrfach halogensubstituierter Arylrest mit höchstens 8 C-Atomen, wobei Halogen Chlor oder Brom ist, sowie mindestens ein hydroxylhaltiger Rest der allgemeinen Formel (II)

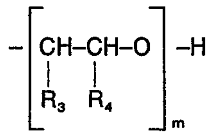 (II)

und $R_2$ ein Rest der allgemeinen Formel (III)

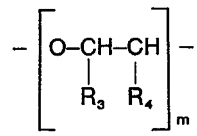 (III)

bedeutet, wobei in den Formeln (II und III) $R_3$ bzw. $R_4$ ein Wasserstoffatom oder ein gegebenenfalls chlorsubstituierter Alkylrest mit 1 bis 6 C-Atomen und m eine Zahl von 1 bis 4 ist, und

b) dem Produkt der allgemeinen Formel (IV)

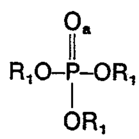 (IV)

in welcher a = 0 oder 1 ist und $R_1$ die vorstehend angegebene Bedeutung hat.

2. Verwendung nach Anspruch 1, dadurch gekennzeichnet, dass das Polyätherpolyol eine Hydroxylzahl von etwa 35 bis 80 mg KOH/g besitzt.

3. Verwendung nach Anspruch 1 oder 2, dadurch gekennzeichnet, dass das Gewichtsverhältnis zwischen dem Polyätherpolyol und dem phosphor- und halogenhaltigen Polyol 100 zu 3–10 beträgt.

## Claims

1. Use of polyurethane soft foams melting within the range about 235 to 310 °C prepared on the basis of a mixture of a polyetherpolyol and a phosphorus- and halogencontaining polyol and used for laminating flat textile structures, the ratio by weight of polyetherpolyol to phosphorus- and halogen-containing polyol being 100 to about 2–20, the phosphorus and halogen-containing polyol being a mixture consisting of:

a) the product of general formula (I)

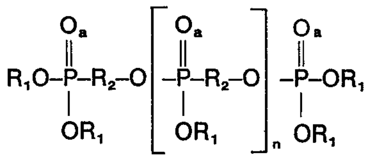 (I)

in which a = 1 or 0 and 1, n = 0 to 4, $R_1$ stands for at least one alkyl radical mono- or polysubstituted with halogen or at least one aryl radical with at most 8 carbon atoms mono- or polysubstituted with halogen, the halogen being chlorine or bromine, and at least one hydroxyl-containing radical of general formula (II)

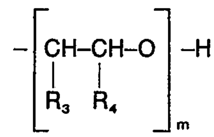 (II)

and $R_2$ stands for a radical of general formula (III)

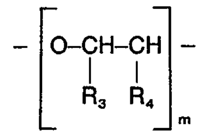 (III)

$R_3$ and $R_4$, respectively, in formulae (II and III) standing for a hydrogen atom or an optionally chlorinesubstituted alkyl radical with 1 to 6 carbon atoms, and m stands for a number of 1 to 4, and

b) the product of general formula (IV)

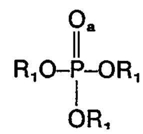 (IV)

in which a = 0 or 1, and $R_1$ has the meaning given above.

2. Use as claimed in claim 1, wherein the polyetherpolyol has a hydroxyl number of about 35 to 80 mg KOH/g.

3. Use as claimed in claim 1 or 2, wherein the ratio by weight of polyetherpolyol to the phosphorus- and halogen-containing polyol is 100 to 3–10.

## Revendications

1. Utilisation de mousses souples de polyuréthannes présentant un intervalle de fusion d'environ 235 à 310 °C, préparées à base d'un mélange d'un polyétherpolyol et d'un polyol phosphoré et halogéné, pour le doublage d'articles planiformes textiles, avec des proportions relatives en poids de 100 à environ 2 à 20 entre le polyétherpolyol et le polyol phosphoré et halogéné, ce dernier étant un mélange consistant en

a) le produit de formule générale I

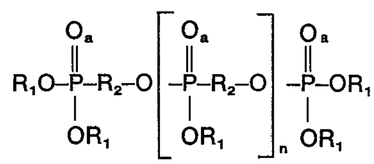 (I)

dans laquelle a = 1 ou 0 et 1, n = 0 à 4, $R_1$ représente au moins un groupe alkyle mono- ou poly-substitué par des halogènes ou un groupe aryle mono- ou poly-substitué par des halogènes et contenant au maximum 8 atomes de carbone, et m est un nombre de 1 à 4, et les halogènes étant le chlore ou le brome, et au moins un groupe hydroxylé de formule générale II

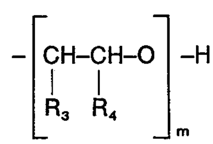 (II)

et $R_2$ représente un reste de formule générale III

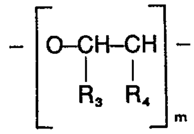 (III)

les symboles $R_3$ et $R_4$ des formules respectives II et III représentant un atome d'hydrogène ou un groupe alkyle éventuellement chloré contenant 1 à 6 atomes de carbone, et m est un nombre de 1 à 4, et

b) le produit de formule générale IV

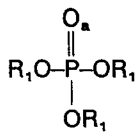 (IV)

dans laquelle a = 0 ou 1 et $R_1$ a la signification indiquée ci-dessus.

2. Utilisation selon la revendication 1, caractérisé en ce que le polyétherpolyol présente un indice d'hydroxyle d'environ 35 à 80 mg de KOH/g.

3. Utilisation selon la revendication 1 ou 2, caractérisé en ce que les proportions relatives entre le polyétherpolyol et le polyol phosphoré et halogéné sont de 100 à 3 à 10.